# EUROPÄISCHE PATENTSCHRIFT

(11) **EP 1 746 294 B1**
(45) Veröffentlichungstag und Bekanntmachung des Hinweises auf die Patenterteilung: **31.03.2010**
(21) Anmeldenummer: 06014149.6
(22) Anmeldetag: 07.07.2006
(51) Int. Cl.: F16B 21/07, F16C 11/06

(54) **Steckkupplung mit dreidimensionaler Ausgleichsbewegung in Plattenmontage**
Plug connector to be mounted on a panel with three-dimensional vibration absorption
Raccord emboîtable à monter sur un panneau avec absorption de vibrations tridimensionnelles

(30) Priorität: 20.07.2005 DE 202005011420 U
(43) Veröffentlichungstag der Anmeldung: 24.01.2007
(73) Patentinhaber: Böllhoff Verbindungstechnik GmbH, 33649 Bielefeld (DE)
(72) Erfinder: Bertram, Andreas, 32049 Herford (DE); Süßenbach, Rainer, 33803 Steinhagen (DE)
(74) Vertreter: Hauck Patent- und Rechtsanwälte

(56) Entgegenhaltungen:
- DE-A1- 2 712 118
- DE-U1- 20 107 949
- DE-U1- 20 108 408
- DE-U1- 20 315 778
- FR-A- 2 378 197

## Beschreibung

Die vorliegende Erfindung betrifft eine Steckkupplung zum lösbaren Verbinden eines ersten Bauteils und eines zweiten Bauteils sowie ein pfannenartiges Kupplungsteil hierfür.

Derartige Steckkupplungen, die einerseits eine einfache Schnappverbindung zwischen den Bauteilen ermöglichen und andererseits für eine Schwingungsentkopplung zwischen den Bauteilen sorgen, sind in verschiedenen Ausführungsformen bekannt, siehe zum Beispiel für DE 198 36 108 A1, DE 299 20 379, DE 201 07 949, DE 201 08 408, DE 202 16 836, DE 203 15 778 und DE 20 2004 000 234. Sie bestehen üblicherweise aus einem elastisch verformbaren pfannenartigen Kupplungsteil mit einer Kugelpfanne und einem Kugelbolzen mit einem Kugelkopf, der in die Kupplungspfanne zum Schließen der Steckkupplung einschnappbar ist.

Bei der Steckkupplung der DE 201 08 408 U , die als nächstliegender Stand der Technik betrachtet werden kann, ist am offenen Ende der Kugelpfanne eine zylindrische Außenwand angeformt, die einerseits einen Ringflansch und andererseits über den Umfang verteilte Haltesegmente aufweist, zwischen denen das eine Bauteil einspannbar ist. Dies erlaubt eine "Plattenmontage" des pfannenartigen Kupplungsteils an dem ersten Bauteil. Schwingungsentkoppelnde Relativbewegungen zwischen den beiden Bauteilen sind bei dieser Steckkupplung aufgrund der relativ hohen Steifigkeit des pfannenartigen Kupplungsteils im Befestigungsbereich sowie aufgrund des verwendeten Werkstoffes im Wesentlichen auf eine Richtung beschränkt.

Bei der Steckkupplung der DE 202 16 836 ist am offenen Ende der Kugelpfanne eine ringförmige Zwischenwand angeformt, an der wiederum eine rohrförmige Außenwand angeformt ist. Die rohrförmige Außenwand umgibt die Kugelpfanne mit radialem Abstand und kann in eine am zugehörigen Bauteil vorgesehene Fassung eingesetzt werden. Die ringförmige Zwischenwand des pfannenartigen Kupplungsteils hat im Längsschnitt ein wellenförmiges Profil, was der Steckkupplung eine hohe Nachgiebigkeit nicht nur in radialer, sondern auch in axialer Richtung verleiht. Die Steckkupplung kann daher dreidimensionale schwingungsentkoppelnde Ausgleichsbewegungen ausführen.

Allerdings ist bei dieser Steckkupplung eine "Plattenmontage" wie bei der vorstehend beschriebenen Steckkupplung nicht möglich.

Aus DE 203 15 778 U1 ist eine Steckkupplung zum lösbaren schwingungsentkoppelnden Verbinden zweier Bauteile bekannt, welche besteht aus einem pfannenartigen Kupplungsteil mit einem Trägerteil aus Kunststoff und einer metallischen Federklammer von denen das Trägerteil in eine an dem ersten Bauteil vorgesehene Fassung so einsetzbar ist, dass das pfannenartige Kupplungsteil darin gehalten wird, und einem bolzenartigen Kupplungsteil mit einem Befestigungsabschnitt zum Festlegen an dem zweiten Bauteil und einem Bolzenkopf, der mit der Federklammer beim Ineinanderstecken der beiden Kupplungsteile eine Rastverbindung eingeht. Das Trägerteil des pfannenartigen Kupplungsteils hat eine in die Fassung des ersten Bauteils einsetzbare rohrförmige Außenwand und einen zentralen Tragabschnitt, die durch in Umfangsrichtung beabstandete Stege miteinander verbunden sind. Die Stege verlaufen im Wesentlichen tangential zu einer Umfangswand des Tragabschnittes des Trägerteils.

Aus DE 27 12 118, insbesondere Figuren 14 bis 17, ist eine Gelenkpfanne für ein Winkelgelenk (Kugelgelenk) bekannt, bei dem die Kugelpfanne bezüglich einer Längsachse ein offenes sowie geschlossenes Ende hat. An dem geschlossenen Ende ist über einen Brückenabschnitt ein hülsenartiger Halteabschnitt so angeformt, dass er die Kugelpfanne mit radialem Abstand umgibt und an einem plattenförmigen Bauteil festlegbar ist. Sowohl die Kugelpfanne wie auch der hülsenartige Halteabschnitt sind mit in Längsrichtung durchgehenden Schlitzen versehen, wodurch diesen Wandabschnitten eine große Flexibilität verliehen wird. Um die Gelenkkugel des Winkelgelenkes in der Kugelpfanne zu halten, ist eine Kappe mit einem Deckelabschnitt und einem an diesem angeformten hohlzylindrischen Abschnitt vorgesehen der in den Zwischenraum zwischen der Kugelpfanne und dem hülsenartigen Halteabschnitt einschiebbar ist.

Der vorliegenden Erfindung liegt die Aufgabe zugrunde, eine Steckkupplung zum lösbaren Verbinden zweier Bauteile sowie ein pfannenartiges Kupplungsteil hierfür zu schaffen, die dreidimensionale schwingungsentkoppelnde Ausgleichsbewegungen zwischen den Bauteilen ermöglichen und für eine Plattenmontage des pfannenartigen Kupplungsteils an dem zugehörigen Bauteil geeignet sind.

Diese Aufgabe wird durch die in Anspruch 1 definierte Steckkupplung gelöst.

Bei der erfindungsgemäß ausgebildeten Steckkupplung hat das pfannenartige Kupplungsteil einen am geschlossenen Ende der Kupplungspfanne angeformten Brückenabschnitt, der die Kugelpfanne mit einem hülsenartigen Halteabschnitt verbindet. Der hülsenartige Halteabschnitt ist am Brückenabschnitt so angeformt, dass er die Kugelpfanne mit radialem Abstand umgibt und mit seinem freien Ende am ersten Bauteil festlegbar ist.

Über den Halteabschnitt und Brückenabschnitt ist die Kugelpfanne gewissermaßen beweglich aufgehängt, so dass die Kugelpfanne mit dem darin aufgenommenen Kugelkopf des Kugelbolzens dreidimensionale schwingungsentkoppelnde Ausgleichsbewegungen zwischen den beiden Bauteilen zulässt. Gleichzeitig ermöglicht diese konstruktive Lösung eine Plattenmontage des pfannenartigen Kupplungsteils am ersten Bauteil, so dass eine besondere Fassung am ersten Bauteil nicht erforderlich ist.

Ferner sind in dem Zwischenraum zwischen der Kugelpfanne und dem hülseförmigen Halteabschnitt über den Umfang verteilte Versteifungsstege vorgesehen, die im Wesentlichen tangential zum Außenumfang der Kugelpfanne verlaufen. Die Versteifungsstege verleihen dem pfannenartigen Kupplungsteil eine gewisse Steifigkeit und sorgen insbesondere für ein Rückstellen der Kugelpfanne in ihre Ausgangsstellung, wenn es zu Ausgleichsbewegungen zwischen den Bauteilen kommt.

Das pfannenartige Kupplungsteil besteht vorzugsweise aus einem Elastomer auf Polyesterbasis mit guter Chemikalienbeständigkeit und Wärmeformbeständigkeit. In Frage kommen vor allem Materialien mit extrem hoher Reißdehnung, beispielsweise in der Größenordnung von 100 bis 450 %. Andere elastisch verformbare Materialien sind jedoch grundsätzlich ebenfalls möglich.

Die Erfindung betrifft ferner ein pfannenartiges Kupplungsteil für eine Steckkupplung, wie sie vorstehend beschrieben wurde.

Vorteilhafte Ausgestaltungen und Weiterbildungen der Erfindung sind in den Unteransprüchen definiert.

Anhand der Zeichnungen wird ein Ausführungsbeispiel der Erfindung näher erläutert. Es zeigt:
Fig. 1 einen Längsschnitt durch eine erfindungsgemäß ausgebildete Steckkupplung im montierten Zustand;
Fig. 2 eine perspektivische Ansicht der Steckkupplung in Fig. 1;
Fig. 3 eine Seitenansicht des pfannenartigen Kupplungsteils der Steckkupplung in den Figuren 1 und 2;
Fig. 4 eine Ansicht von unten auf das pfannenartige Kupplungsteil in Fig. 3;
Fig. 5 eine Draufsicht auf das pfannenartige Kupplungsteil in Fig. 3;
Fig. 6 eine Schnittansicht in Blickrichtung der Pfeile VI-VI in Fig. 5;
Fig. 7 eine Schnittansicht in Blickrichtung der Pfeile VII-VII in Fig. 5;
Fig. 8 eine perspektivische Ansicht des pfannenartigen Kupplungsteils;
Fig. 9 eine der Fig. 6 entsprechende Schnittansicht einer abgewandelten Ausführungsform des pfannenartigen Kupplungsteils.

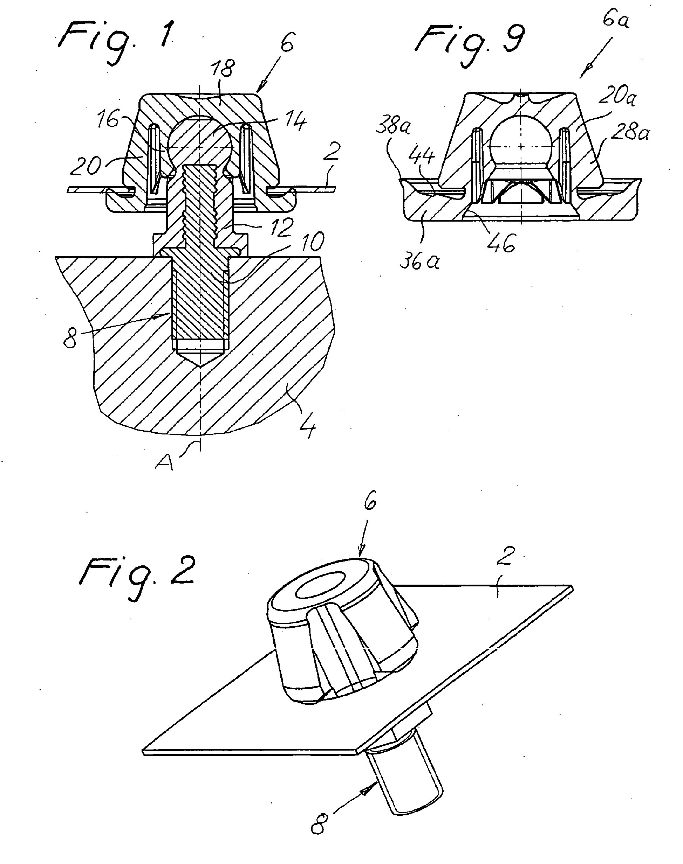

Die in den Figuren 1 und 2 dargestellte Steckkupplung dient zum lösbaren Verbinden eines Bauteils 2 und eines Bauteils 4 und kann beispielsweise zur Befestigung von Fahrzeug-Rückleuchten eingesetzt werden. Die Steckkupplung besteht aus einem pfannenartigen Kupplungsteil 6 und einem Kugelbolzen 8. Das pfannenartige Kupplungsteil 6 ist an dem Bauteil 2 festgelegt, das zumindest im Verbindungsbereich plattenförmig ausgebildet ist, und der Kugelbolzen 8 ist an dem Bauteil 4 festgelegt.

Der Kugelbolzen 8 besteht im dargestellten Ausführungsbeispiel aus einem metallischen Teil 10 und einem Kunststoffteil 12. Das Kunststoffteil 12 ist durch Umspritzen eines zapfenförmigen Vorsprungs mit dem metallischen Teil 10 verbunden und weist einen teilkugelförmigen Kopf 14 auf. Das metallische Teil 10 ist in eine Gewindebohrung des Bauteils 4 eingeschraubt und dadurch am Bauteil 4 festgelegt. Es sei jedoch darauf hingewiesen, dass der Kugelbolzen auch in anderer Weise ausgebildet und in anderer Weise am Bauteil 4 festgelegt sein kann.

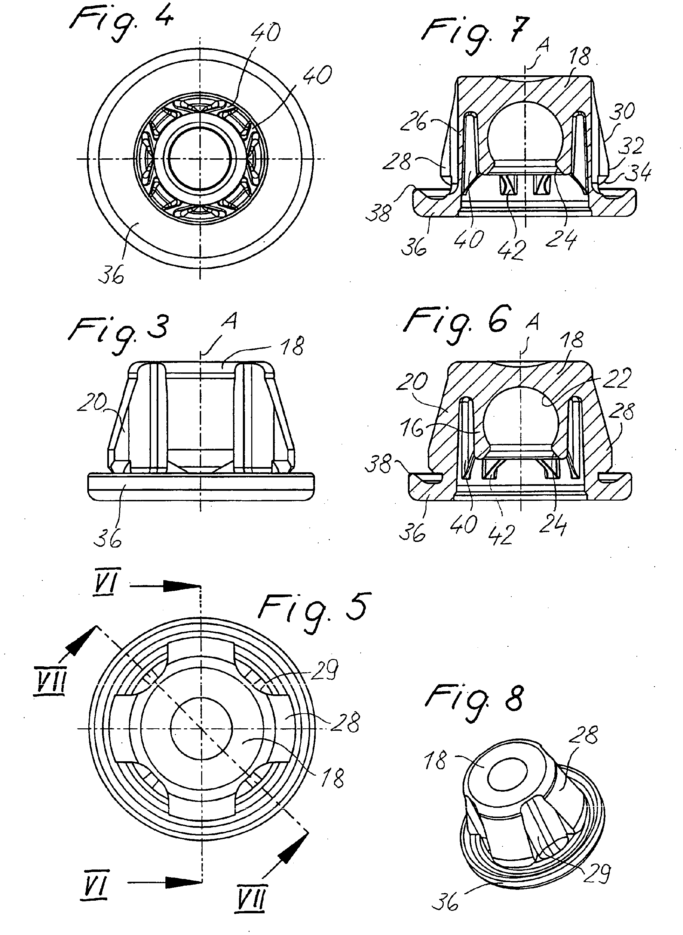

Das pfannenartige Kupplungsteil 6 ist in den Figuren 4 bis 8 im Einzelnen dargestellt. Es hat eine zentrale Achse A und besteht aus einer Kugelpfanne 16, einem Brückenabschnitt 18 und einem Befestigungsabschnitt 20.

Die Kugelpfanne 16 hat eine teilkugelförmige Ausnehmung 22, die an die Form des Kugelkopfes 14 so angepasst ist, dass sie eine Schnappverbindung eingehen können (Fig. 1). Es sei jedoch darauf hingewiesen, dass der Kugelkopf 14 des Kugelbolzens 8 und die Kugelpfanne 16 auch eine andere Form haben können, sofern sie nur durch eine Schnapp- beziehungsweise Rastverbindung miteinander verbindbar sind. Am offenen Ende der Ausnehmung 22 der Kugelpfanne 16 schließt sich ein kurzer trichterförmiger Einführabschnitt 24 an, der das Einführen des Kugelkopfes 14 in die Kugelpfanne 16 erleichtert.

Der Brückenabschnitt 18 ist am geschlossenen Ende der Kugelpfanne 16 angeformt und verläuft von dort bezüglich der zentralen Achse A radial nach außen. Im dargestellten Ausführungsbeispiel ist der Brückenabschnitt 18 plattenförmig ausgebildet und liegt in einer auf der zentralen Achse A senkrecht stehenden radialen Ebene. Die Dicke des Brückenabschnittes 18 wird entsprechend den Anforderungen an die Festigkeit und den gewünschten Abmessungen der Steckkupplung gewählt.

Der Befestigungsabschnitt 20 ist im Wesentlichen hülsen- beziehungsweise rohrförmig ausgebildet und am radial äußeren Rand des Brückenabschnittes 18 angeformt. Er weist eine im Wesentlichen zylindrische Wand 26 auf, die von dem radial äußeren Rand des Brückenabschnittes 18 parallel zur zentralen Achse A nach unten (in den Figuren 6, 7) verläuft. Der Brückenabschnitt 18 verbindet somit die Kugelpfanne 16 und den Befestigungsabschnitt 20 in der Weise, dass die Wand 26 des Befestigungsabschnittes 20 den äußeren Umfang der Kugelpfanne 16 mit radialem Abstand umgibt und somit ein ringförmiger Zwischenraum zwischen diesen Teilen vorhanden ist.

An der Wand 26 des Befestigungsabschnittes 20 sind mehrere über den Umfang verteilte, radial vorstehende Haltesegmente 28 angeformt, die zwischen sich abgerundete Vertiefungen 29 bilden, siehe insbesondere Figuren 5 und 8. Die Haltesegmente 28 haben schräg verlaufende Außenränder 30, die als Teilkegelflächen ausgebildet sind. An die schräg verlaufenden Außenränder 30 schließen sich kurze, teilzylindrische Zwischenflächen 32 an, die in einwärts gerichtete Fasen 34 übergehen, siehe insbesondere Figuren 6 und 7.

Der Befestigungsabschnitt 20 weist ferner einen Ringflansch 36 auf, der von dem (in den Figuren 3, 6, 7) unteren Ende der Wand 26 abgeht. Am radial äußeren Rand des Ringflansches 36 ist eine Dichtlippe 38 angeformt. Die Haltesegmente 28 und der Ringflansch 36 dienen zur Befestigung des pfannenförmigen Kupplungsteils 6 am Bauteil 2 (Fig. 1), wie noch genauer erläutert wird.

In dem Zwischenraum zwischen der Kugelpfanne 16 und dem Befestigungsabschnitt 20 sind mehrere über den Umfang verteilte Versteifungsrippen 40 vorgesehen, die einerseits am Außenumfang der Kugelpfanne 16 und andererseits an der Wand 26 des Befestigungsabschnittes 20 angeformt sind. Wie insbesondere in Fig. 4 zu sehen ist, verlaufen die Versteifungsstege 40 im Wesentlichen tangential zum Außenumfang der Kugelpfanne 16. Sie sind paarweise einander so zugeordnet, dass die Versteifungsstege jedes Paares entgegengesetzt zur Umfangsrichtung gerichtet sind. Im dargestellten Ausführungsbeispiel sind vier Stegpaare, also insgesamt acht Versteifungsstege 40 vorgesehen. Die Stegpaare sind den Haltesegmenten 28 so zugeordnet, dass jeweils ein Stegpaar und ein Haltesegment 28 in radialer Richtung zueinander ausgerichtet sind. Im dargestellten Ausführungsbeispiel sind somit vier Haltesegmente 28 vorgesehen. Es versteht sich jedoch, dass die Anzahl der Haltesegmente 28 und der Versteifungsstege 40 auch anders gewählt werden kann.

Wie insbesondere in den Figuren 6 und 7 zu sehen ist, ist das offene Ende der Kugelpfanne 16 gegenüber dem Ringflansch 36 axial nach innen versetzt. Die Versteifungsstege 40 erstrecken sich in axialer Richtung über die gesamte axiale Länge des Außenumfangs der Kugelpfanne 16 und somit über die gesamte axiale Länge des Zwischenraumes zwischen der Kugelpfanne 16 und dem Befestigungsabschnitt 20. Die Versteifungsstege 40 sind an ihren freien Enden mit abgeschrägten Flächen 42 (Figuren 6, 7) versehen, die als Einführhilfen zum Einführen des Kopfes 14 des Kugelbolzens 18 in die Kugelpfanne 16 dienen.

Das pfannenartige Kupplungsteil 6 besteht aus Kunststoff und vorzugsweise aus einem Elastomer auf Polyesterbasis, insbesondere Polybutylenterephthalat (PBT) oder Polyethylenterephthalat (PET). Diese Materialien sind zwar elastisch verformbar, haben jedoch eine relativ hohe Schor-Härte sowie eine ausgezeichnete Wärmeformbeständigkeit (150°C und mehr). Darüber hinaus verfügen sie über eine gute Chemikalienbeständigkeit, insbesondere Dieselölbeständigkeit. Vorzugsweise werden diese Materialien so gewählt, dass sie eine extrem hohe Reißdehnung haben. Die Reißdehnung ist im Allgemeinen höher als 100 % und kann je nach Anwendungszweck in der Größenordnung von 300 bis 450 % liegen. Es kommen jedoch auch andere Kunststoffe wie zum Beispiel vernetzte Elastomere (zum Beispiel Gummi/Kautschuk) in Frage.

Um das pfannenartige Kupplungsteil 6 an dem plattenförmigen Bauteil 2 zu befestigen, wird das pfannenartige Kupplungsteil 6 mit dem geschlossenen Ende voraus in ein Befestigungsloch des Bauteils 2 eingeführt. Da die oberen Enden der Haltesegmente 28 etwas axial versetzt zu der oberen Stirnfläche des Brückenabschnittes 18 sind, befindet sich oberhalb der Haltesegmente 28 ein kurzer zylindrischer Bereich, dessen Durchmesser im Wesentlichen dem Durchmesser des Befestigungsloches des Bauteils 2 entspricht und der zur Oberseite des Brückenabschnittes 18 hin abgerundet ist.

Beim Einführen des Halteabschnittes 20 in das Befestigungsloch des Bauteils 2 werden die Haltesegmente 28 radial nach innen "gefaltet". Dies wird einerseits durch die Elastizität des verwendeten Kunststoffes und andererseits durch den Freiraum zwischen dem Halteabschnitt 20 und der Kugelpfanne 16 ermöglicht. Wenn sich die Haltesegmente 28 durch das Befestigungsloch des Bauteils 2 hindurchbewegt haben, erleichtern die Fasen 34 der Haltesegmente 28 die Zentrierung des Kupplungsteils 6 sowie das Rückfedern der Haltesegmente 28 in die Ausgangslage. Dieser Vorgang wird auch durch die Versteifungsstege 40 unterstützt.

Das Bauteil 2 ist nun zwischen der Unterseite der Haltesegmente 28 und der Dichtlippe 38 des Ringflansches 36 eingespannt. Da der Ringflansch 36 mit der Dichtlippe 38 elastisch verformbar ist, können plattenförmige Bauteile 2 unterschiedlicher Dicke in Verbindung mit dem pfannenartigen Kupplungsteil 6 verwendet werden. Die Dicke des Bauteils 2 kann beispielsweise um einen Betrag in der Größenordnung von 1 bis 2mm variieren.

Wenn das pfannenartige Kupplungsteil 6 in der beschriebenen Weise an dem Bauteil 2 befestigt ist und auch der Kugelbolzen 8 mit dem Bauteil 4 fest verbunden ist, ist zum Schließen der Steckkupplung lediglich erforderlich, dass durch eine Relativbewegung zwischen den Bauteilen 2 und 4 der Kugelbolzen 8 axial in das pfannenartige Kupplungsteil 6 eingesteckt wird, bis der Kopf 14 in die Kugelpfanne 16 einrastet. In diesem Zustand sorgt die Steckkupplung nicht nur für eine lösbare Verbindung, sondern auch für eine Schwingungsentkopplung zwischen den Bauteilen 2 und 4. Da die Kugelpfanne 16 über den Brückenabschnitt 18 und den Halteabschnitt 20 gewissermaßen schwimmend aufgehängt ist und die Versteifungsstege 40 im Wesentlichen tangential zum Außenumfang der Kugelpfanne 16 verlaufen, kann die Kugelpfanne 16 radiale Ausgleichsbewegungen zur Schwingungsentkopplung ausführen. Axiale Ausgleichsbewegungen des pfannenartigen Kupplungsteils werden hauptsächlich durch die Elastizität des verwendeten Werkstoffs ermöglicht, dessen Reißdehnung, wie bereits erwähnt, größer als 100 % und beispielsweise in der Größenordnung von 300 bis 450 % liegen kann. Die Versteifungsstege 40 sorgen im Übrigen aufgrund ihres Rückstellvermögens dafür, dass die Kugelpfanne 16 immer wieder in ihre zentrische Ausgangslage zurückgestellt wird.

Bei dem in den Figuren 1 bis 8 dargestellten Ausführungsbeispiel ist das pfannenartige Kupplungsteil 6 so dimensioniert, dass es spielfrei in dem Befestigungsloch des Bauteils 2 sitzt. Das abgewandelte Ausführungsbeispiel der Fig. 9 unterscheidet sich von dem vorstehend beschriebenen Ausführungsbeispiel dadurch, dass das pfannenartige Kupplungsteil 6a mit Spiel im Befestigungsloch des Bauteils 2 angeordnet ist. Hierdurch kann die Steckkupplung zusätzliche Ausgleichsbewegungen ausführen und ferner Fertigungstoleranzen ausgleichen, wenn beispielsweise mehrere Steckkupplungen zum Verbinden der Bauteile 2 und 4 verwendet werden.

Ferner ist bei dem Ausführungsbeispiel der Fig. 9 der Ringflansch 36a größer als bei dem vorstehend beschriebenen Ausführungsbeispiel dimensioniert, was auch für die Dichtlippe 38a gilt. Um dennoch eine gute Abdichtung zwischen dem pfannenartigen Kupplungsteil 6a und dem Bauteil 2 zu erzielen, ist der Ringflansch 36a in einem Zwischenbereich radial zwischen der Dichtlippe 38a und dem Innenumfang des Kupplungsteils 6a mit einem Dichtring 44 versehen. Statt eines Dichtringes können auch zwei oder mehr Dichtringe vorgesehen werden. Ferner stehen die Haltesegmente 28a radial weiter nach außen vor als bei dem vorstehend beschriebenen Ausführungsbeispiel, um trotz des Spiels das Bauteil 2 sicher zwischen den Haltessegmenten 28a und dem Ringflansch 36a einzuspannen. Ferner ist der Ringflansch 36a, wie in Fig. 9 zu sehen ist, mit einem kurzen konischen Einführabschnitt 46 versehen, um den Kugelbolzen beim Einführen in die Kugelpfanne zu führen und zu zentrieren.

Im Übrigen entspricht das pfannenartige Kupplungsteil 6a der Fig. 9 demjenigen der Figuren 1 bis 8.

## Patentansprüche

1. Steckkupplung zum lösbaren schwingungsentkoppelnden Verbinden eines ersten Bauteils (2) und eines zweiten Bauteils (4), die von der Steckkupplung in einer vorgegebenen und, abgesehen von schwingungsentkoppelnden Bewegungen, unveränderbaren Lage relativ zueinander gehalten werden, mit
einem elastisch verformbaren pfannenartigen Kupplungsteil (6) mit einer Kugelpfanne (16), die bezüglich einer Längsachse (A) ein offenes sowie geschlossenes Ende hat und in Umfangsrichtung durchgehend ausgebildet ist, einem Brückenabschnitt (18), der am geschlossenen Ende der Kugelpfanne (16) angeformt ist, und einem in Umfangsrichtung durchgehend ausgebildeten hülsenartigen Halteabschnitt (20), der an dem Brückenabschnitt (18) so angeformt ist, dass er die Kugelpfanne (16) mit radialem Abstand umgibt und an dem ersten Bauteil (2) festlegbar ist, wobei zwischen der Kugelpfanne (16) und dem Halteabschnitt (20) in Umfangsrichtung verteilte Versteifungsstege (40) verlaufen, und
einem Kugelbolzen (8), der an dem zweiten Bauteil (4) festlegbar ist und einen Kugelkopf (14) aufweist, welcher in die Kugelpfanne (16) zum Schließen der Steckkupplung einschnappbar ist.

2. Steckkupplung nach Anspruch 1, **dadurch gekennzeichnet, dass** der Brückenabschnitt (18) im Wesentlichen plattenförmig ausgebildet ist.

3. Steckkupplung nach Anspruch 1 oder 2, **dadurch gekennzeichnet, dass** die Versteifungsstege (40) im Wesentlichen tangential zum Außenumfang der Kugelpfanne (16) verlaufen.

4. Steckkupplung nach Anspruch 3, **dadurch gekennzeichnet, dass** die Versteifungsstege (40) paarweise einander so zugeordnet sind, dass die Versteifungsstege (40) jedes Paares im Umfangsrichtung entgegengesetzt zueinander gerichtet sind.

5. Steckkupplung nach einem der vorhergehenden Ansprüche, **dadurch gekennzeichnet, dass** das offene Ende der Kugelpfanne (16) gegenüber dem freien Ende des Halteabschnitts (20) axial nach innen versetzt ist.

6. Steckkupplung nach einem der vorhergehenden Ansprüche, **dadurch gekennzeichnet, dass** der Halteabschnitt (20) einen Ringflansch (36) und über den Umfang verteilte Haltesegmente (28) aufweist, zwischen denen das erste Bauteil (2) einspannbar ist.

7. Steckkupplung nach Anspruch 6, **dadurch gekennzeichnet, dass** die Haltesegmente (28) an einer im Wesentlichen zylindrischen Wand (26) des Halteabschnitts (20) angeformt sind.

8. Steckkupplung nach Anspruch 6 oder 7, **dadurch gekennzeichnet, dass** die Haltesegmente (28) schräg verlaufende Außenränder (30) zum leichteren Einführen des pfannenartigen Kupplungsteils (6) in ein Aufnahmeloch des ersten Bauteils (2) haben.

9. Steckkupplung nach einem der Ansprüche 6 bis 8, **dadurch gekennzeichnet, dass** die Haltesegmente (28) an ihren axialen Enden benachbart zum Ringflansch (36) Fasen (34) haben.

10. Steckkupplung nach einem der Ansprüche 6 bis 9 in Verbindung mit Anspruch 4, **dadurch gekennzeichnet, dass** die Anzahl der Haltesegmente (28) gleich der Anzahl der Paare der Versteifungsstege (40) ist.

11. Steckkupplung nach Anspruch 10, **dadurch gekennzeichnet, dass** jedes Haltesegment (28) einem Paar der Versteifungsstege (40) in radialer Richtung zugeordnet ist.

12. Steckkupplung nach einem der Ansprüche 6 bis 11, **dadurch gekennzeichnet, dass** der Ringflansch (36; 36a) an seinem äußeren Umfang eine umlaufende Dichtlippe (38; 38a) zur Anlage an dem ersten Bauteil (2) hat.

13. Steckkupplung nach Anspruch 12, **dadurch gekennzeichnet, dass** zwischen der Dichtlippe (38a) und dem inneren Umfang des Ringflansches (36a) mindestens ein Dichtring (44) zur Anlage am ersten Bauteil (2) angeformt ist.

14. Steckkupplung nach einem der vorhergehenden Ansprüche, **dadurch gekennzeichnet, dass** das pfannenartige Kupplungsteil (6) aus einem thermoplastischen Elastomer auf Polyesterbasis mit guter Chemikalienbeständigkeit und Wärmeformbeständigkeit besteht.

15. Steckkupplung nach Anspruch 14, **dadurch gekennzeichnet, dass** das Elastomer auf Polyesterbasis ein Polybuthylenterephthalat (PBT) oder Polyethylenterephthalat (PET) ist.

16. Steckkupplung nach einem der Ansprüche 1 bis 13, **dadurch gekennzeichnet, dass** das pfannenartige Kupplungsteil (6) aus einem vernetzten Elastomer besteht.

17. Pfannenartiges Kupplungsteil mit allen Merkmalen des pfannenartigen kupplungsteils der Steckkupplung nach einem der vorhergehenden Ansprüche.

## Claims

1. A plug-in coupling for releasably connecting a first structural member (2) and a second structural member (4) decoupling vibration, the structural members are retained in a predetermined and unchangeable position to each other by said plug-in coupling, apart from the movements decoupling vibration comprising:
a resiliently deformable socket-shaped coupling member (6) having a ball socket (16) which has an open socket end and a closed socket end relative to a longitudinal axis (A) and which is integrally molded in circumferential direction, a bridging portion (18) integrally molded to said closed end of the ball socket (16), and a sleeve-shaped retaining portion (20) integrally molded in circumferential direction which is molded to said bridging portion (18) such that it radially circumscribes said ball socket (16) in spaced relationship thereto and being securable to said first structural member (2), while in circumferential direction arranged stiffening ribs (40) run between said ball socket (16) and said retaining portion (20), and
a ball stud (8) securable to said second structural member (4) and having a spherical head (14) which can be snapped into the ball socket (16) to lock the plug-in coupling.

2. A plug-in coupling according to claim 1, **characterized in that** the bridging portion (18) is substantially of plate-shaped configuration.

3. A plug-in coupling according to claim 1 or 2, **characterized in that** the stiffening ribs (40) extend substantially tangential to the outer periphery of the ball socket (16).

4. A plug-in coupling according to claim 3, **characterized in that** the stiffening ribs (40) are arranged in pairs in such a way that the said stiffening ribs (40) of each pair are aligned opposite one another in the circumferential direction.

5. A plug-in coupling according to one of the preceding claims, **characterized in that** the open end of the ball socket (16) is axially offset inwardly relative the free end of the retaining portion (20).

6. A plug-in coupling according to one of the preceding claims, **characterized in that** the retaining portion (20) has an annular flange (36) and retaining segments (28) spaced along the periphery, between which the first structural member (2) can be clamped.

7. A plug-in coupling according to claim 6, **characterized in that** the retaining segments (28) are integrally molded to a substantially cylindrical wall (26) of the retaining portion (20).

8. A plug-in coupling according to claim 6 or 7, **characterized in that** the retaining segments (28) have sloped outer edges (30) for easier insertion of the socket-like coupling member (6) in a receiving hole of the first structural member (2).

9. A plug-in coupling according to one of the claims 6 to 8, **characterized in that** the retaining segments (28) have bevels (34) on their axial ends adjacent to the annular flange (36).

10. A plug-in coupling according to one of the claims 6 to 9 in connection with claim 4, **characterized in that** the retaining segments (28) are equal in number to pairs of said stiffening ribs (40).

11. A plug-in coupling according to claim 10, **characterized in that** each retaining segment (28) is allocated to a pair of stiffening ribs (40) in the radial direction.

12. A plug-in coupling according to one of the claims 6 to 11, **characterized in that** the annular flange (36, 36a) has a circumferential sealing lip (38, 38a) at its outer periphery to abut against the first structural member (2).

13. A plug-in coupling according to claim 12, **characterized in that** at least one sealing ring (44) is integrally molded between the sealing lip (38a) and the inner periphery of the annular flange (36a) to abut against the first structural member (2).

14. A plug-in coupling according to one of the preceding claims, **characterized in that** the socket-like coupling member (6) consists of a polyester-based thermoplastic elastomer having good chemical resistance and thermostability.

15. A plug-in coupling according to claim 14, **characterized in that** the polyester-based elastomer is a polybutylene terephthalate (PBT) or a polyethylene terephthalate (PET).

16. A plug-in coupling according to one of the claims 1 to 13, **characterized in that** the socket-like coupling member (6) consists of a cross-linked elastomer.

17. Socket-like coupling member comprising all features of the socket-like coupling member of the plug-in coupling according to one of the preceding claims.

## Revendications

1. Raccord emboîtable pour l'assemblage à découplage d'oscillations détachable d'un premier élément de construction (2) et d'un second élément de construction (4), qui sont maintenus par le raccord emboîtable l'un par rapport à l'autre dans une position prédéfinie et, à l'exception des mouvements de découplage d'oscillations, inaltérable, avec
une pièce d'accouplement (6) de type coupelle déformable élastiquement avec une crapaudine (16) qui a par rapport à un axe longitudinal (A) une extrémité ouverte ainsi qu'une extrémité fermée et est formée de manière continue dans le sens circonférentiel, une section de pont (18) qui est formée sur l'extrémité fermée de la crapaudine (16), et une section de retenue (20) de type manchon formée de manière continue dans le sens circonférentiel qui est formée sur la section de pont (18) de telle façon qu'elle entoure la crapaudine (16) avec un écartement radial et peut être fixée sur le premier élément de construction (2), des âmes de rigidification (40) distribuées dans le sens circonférentiel s'étendant entre la crapaudine (16) et la section de retenue (20), et
un boulon à rotule (8) qui peut être fixé sur le second élément de construction (4) et présente un embout sphérique (14) qui peut être enclenché dans la crapaudine (16) pour fermer le raccord emboîtable.

2. Raccord emboîtable selon la revendication 1, **caractérisé en ce que** la section de pont (18) est formée essentiellement en plate-forme.

3. Raccord emboîtable selon la revendication 1 ou 2, **caractérisé en ce que** les âmes de rigidification (40) s'étendent essentiellement de manière tangentielle à la circonférence extérieure de la crapaudine (16).

4. Raccord emboîtable selon la revendication 3, **caractérisé en ce que** les âmes de rigidification (40) sont rangées par paires les unes par rapport aux autres de telle sorte que les âmes de rigidification (40) de chaque paire sont orientées dans le sens circonférentiel de manière opposée l'une à l'autre.

5. Raccord emboîtable selon l'une des revendications précédentes, **caractérisé en ce que** l'extrémité ouverte de la crapaudine (16) est décalée axialement vers l'intérieur par rapport à l'extrémité libre de la section de retenue (20).

6. Raccord emboîtable selon l'une des revendications précédentes, **caractérisé en ce que** la section de retenue (20) présente un collet annulaire (36) et des segments de retenue (28) distribués sur la circonférence, entre lesquels le premier élément de construction (2) peut être serré.

7. Raccord emboîtable selon la revendication 6, **caractérisé en ce que** les segments de retenue (28) sont formés sur une paroi essentiellement cylindrique (26) de la section de retenue (20).

8. Raccord emboîtable selon la revendication 6 ou 7, **caractérisé en ce que** les segments de retenue (28) ont des bords extérieurs (30) obliques pour une introduction plus facile de la pièce d'accouplement (6) de type coupelle dans un trou de réception du premier élément de construction (2).

9. Raccord emboîtable selon l'une des revendications 6 à 8, **caractérisé en ce que** les segments de retenue (28) ont à leurs extrémités axiales des chanfreins (34) adjacents au collet annulaire (36).

10. Raccord emboîtable selon l'une des revendications 6 à 9 en combinaison avec la revendication 4, **caractérisé en ce que** le nombre de segments de retenue (28) est égal au nombre de paires des âmes de rigidification (40).

11. Raccord emboîtable selon la revendication 10, **caractérisé en ce que** chaque segment de retenue (28) est assigné à une paire des âmes de rigidification (40) dans le sens radial.

12. Raccord emboîtable selon l'une des revendications 6 à 11, **caractérisé en ce que** le collet annulaire (36 ; 36a) a au niveau de sa circonférence extérieure une lèvre d'étanchéité (38 ; 38a) circonférentielle pour l'appui contre le premier élément de construction (2).

13. Raccord emboîtable selon la revendication 12, **caractérisé en ce qu'**entre la lèvre d'étanchéité (38a) et la circonférence intérieure du collet annulaire (36a) est formée au moins une bague d'étanchéité (44) pour l'appui contre le premier élément de construction (2).

14. Raccord emboîtable selon l'une des revendications précédentes, **caractérisé en ce que** la pièce d'accouplement (6) de type coupelle est constituée d'un élastomère thermoplastique à base de polyester avec une bonne résistance aux agents chimiques et une bonne résistance à la déformation par la chaleur.

15. Raccord emboîtable selon la revendication 14, **caractérisé en ce que** l'élastomère à base de polyester est un polybuthylène téréphtalate (PBT) ou polyéthylène téréphtalate (PET).

16. Raccord emboîtable selon l'une des revendications 1 à 13, **caractérisé en ce que** la pièce d'accouplement (6) de type coupelle est constituée d'un élastomère réticulé.

17. Pièce d'accouplement de type coupelle avec toutes les caractéristiques de la pièce d'accouplement de type coupelle du raccord emboîtable selon l'une des revendications précédentes.
